# EUROPÄISCHE PATENTANMELDUNG

(11) **EP 1 530 048 A1**
(43) Veröffentlichungstag der Anmeldung: **11.05.2005**
(21) Anmeldenummer: 04026253.7
(22) Anmeldetag: 05.11.2004
(51) Int. Cl.: G01P 3/42, F16D 66/00, B60T 17/22, B60T 8/32, B60T 8/00, H05K 5/06

(54) **Sensorbox im Fahrwerksbereich eines Fahrzeuges**

(30) Priorität: 08.11.2003 DE 10352268
(71) Anmelder: Hirschmann Automotive GmbH, 6830 Rankweil-Brederis (AT)
(72) Erfinder: Schmid, Martin, 6820 Frastanz (AT); Ludwig, Helmuth, 6840 Götzis (AT)
(74) Vertreter: Thul, Hermann, Dipl.-Phys.

(57) **Zusammenfassung**

Vorrichtung (1) zur Signalerfassung und Signalaufbereitung, wobei Sensoren (6.1 bis 6.N) zur Erfassung von Fahrwerksparametern eines Fahrzeuges im Fahrwerksbereich angeordnet sind und die erfaßten Parameter einem Elektronikmodul (2) zur Aufbereitung zugeführt werden, wobei erfindungsgemäß vorgesehen ist, dass das Elektronikmodul (2) entsprechend der Anzahl der Sensoren (6.1 bis 6.N) Signaleingänge (2.1 bis 2.N) aufweist sowie in einem dichtend abschließenden und temperaturfesten Gehäuse im Fahrwerksbereich angeordnet ist.

## Beschreibung

Die Erfindung betrifft eine Vorrichtung zur Signalerfassung und Signalaufbereitung von Signalen, die im Fahrwerksbereich eines Fahrzeuges erfaßt werden, gemäß den Merkmalen des Oberbegriffs des Patentanspruchs 1.

Eine Vorrichtung zur Signalerfassung und Signalaufbereitung ist beispielsweise aus der DE 43 22 440 C1 bekannt. Dort sind im Bereich des Fahrwerkes eines Fahrzeuges z. B. ein Drehzahlfühler und ein Bremsbelagverschleißfühler angeordnet, deren Signale über eine Signalleitung zu einem räumlich getrennten Steuergerät für die weitere Auswertung und Ansteuerung von Aktuatoren (z. B. für ABS- bzw. ESP-Zwecke) gelangen. Über die Signalzusammenführung der Signale der einzelnen Sensoren im Fahrwerksbereich ist aus der DE 43 22 440 C1 nichts bekannt.

Aus der DE 195 36 006 A1 ist es ebenfalls bekannt, im Fahrwerksbereich mehrere Sensoren anzuordnen, die unterschiedliche Fahrwerksparameter (hier z. B. die Drehzahl eines Rades und der Bremsbelagverschleiß) zu erfassen. Die hier beschriebenen Signale der beiden Sensoren werden nach einer Aufbereitung über eine einzige gemeinsame Leitung einem räumlich entfernt angeordneten Steuergerät für die weitere Verarbeitung bzw. Auswertung zugeführt. Angaben zur Ausgestaltung der Anordnung der Sensoren bzw. die hardwaremäßige Realisierung der Signalzusammenfassung ist aus der DE 195 36 006 A1 nicht bekannt.

Der Erfindung liegt die Aufgabe zugrunde, eine Vorrichtung zur Signalerfassung und Signalaufbereitung bereitzustellen, mit der die von Sensoren im Fahrwerksbereich eines Fahrzeuges erfaßten Fahrwerksparameter schnell aufbereitet werden können und die darüber hinaus eine einfache Anpassung an die einzelnen Teile des Fahrwerkes ermöglicht. Diese Aufgabe ist durch die Merkmale des Patentanspruchs 1 gelöst.

Erfindungsgemäß ist vorgesehen, dass ein für die Signalaufbereitung vorgesehenes Elektronikmodul entsprechend der Anzahl der Sensoren Signaleingänge aufweist sowie in einem dichtend abschließenden Gehäuse im Fahrwerksbereich angeordnet ist. Dadurch ist zum einen der Vorteil gegeben, dass die erfaßten Signale sofort an der Stelle aufbereitet werden können, an der sie erfaßt worden sind. Zu diesem Zweck werden die Sensoren, die sich im Fahrwerksbereich befinden, direkt an das Elektronikmodul angeschlossen, das sich erfindungsgemäß ebenfalls im Fahrwerksbereich befindet und nicht, wie dies beim Stand der Technik der Fall ist, entfernt angeordnet ist (z. B. im Amaturenbrett des Fahrzeuges). Um den Einsatz der empfindlichen Elektronik in dem Elektronikmodul im Fahrwerksbereich zu ermöglichen, ist weiterhin erfindungsgemäß vorgesehen, dass das Elektronikmodul in einem dichtend abschließenden und auch temperaturfesten Gehäuse im Fahrwerksbereich angeordnet ist. Dabei ist daran zu denken, dass, wenn die Sensoren über Steckverbindungen mit dem Elektronikmodul verbunden werden, diese Steckverbindungen ebenfalls dichtend abschließend und insbesondere temperaturfest sind. Ein weiterer Vorteil besteht darin, dass nach der Signalaufbereitung alle erfaßten Signale über vorzugsweise einen einzigen Signalausgang abgebbar sind, wobei in besonders vorteilhafter Weise der Signalausgang als Busschnittstelle ausgebildet ist, über die die erfaßten und aufbereiteten Signale an zumindest ein weiteres Steuergerät abgebbar sind. Diese Schnittstelle bzw. dieser Signalausgang kann derart gestaltet sein, dass die Signalübertragung drahtgebunden, drahtlos oder optisch (zum Beispiel über Lichtwellenleiter) erfolgt. So ist es durchaus denkbar, dass die im Fahrwerksbereich erfaßten und aufbereiteten Signale von dem Elektronikmodul drahtlos (z. B. über Funk) an das zumindest eine weitere Steuergerät im Fahrzeug übertragen werden, welches hierzu entsprechende Empfangsmittel besitzt. Ein weiterer Vorteil des erfindungsgemäßen Elektronikmoduls ist der, dass es zumindest genausoviele Signaleingänge aufweist, wie Sensoren im Fahrwerksbereich vorhanden sind. So weist beispielsweise das Elektronikmodul eine Maximalanzahl von Signaleingängen auf, an die wahlweise die (je nach Ausstattung des Fahrzeuges) erforderlichen Sensoren anschließbar sind. So sind beispielsweise für heutige moderne Fahrzeuge Sensoren unbedingt erforderlich, die die Drehzahl eines Rades des Fahrzeuges erfassen. Diese erfaßten Drehzahlsensoren sind für Antiblockiersysteme (ABS) unbedingt erforderlich. Gleiches gilt für elektronische Stabilititätsprogramme (ESP), bei denen Drehwinkel einer lenkbaren Achse erfaßt werden, wenn das Fahrzeug mit einem solchen System ausgerüstet ist. Je nach optionaler Ausrüstung des Fahrzeuges kommen Sensoren hinzu, die beispielsweise den Verschleiß eines Bremsbelages, die Stellung eines Dämpfer- oder Federbeines oder den Druck im Reifen erfassen, wobei diese Aufzählung rein beispielhaft und nicht abschließend ist. Prinzipiell können alle erforderlichen Parameter, vor allen Dingen veränderbare Parameter im Fahrwerksbereich erfaßt und dem Elektronikmodul zugeführt werden. Ein zusätzlicher Vorteil der Signalerfassung an Ort und Stelle und vor allen Dingen auch der Signalaufbereitung an Ort und Stelle hat den Vorteil, dass die Signale so aufbereitet und von dem Elektronikmodul abgegeben werden können, dass sie, insbesondere standardisiert, von dem zumindest einen nachgeschalteten Steuergerät weiterverarbeitet werden können. Das bedeutet, dass in dem nachgeschalteten Steuergerät keine Signalaufbereitung mehr erforderlich ist, sondern dort direkt die Signalauswertung und davon abhängig die Ansteuerung von Aktuatoren oder dergleichen erfolgen kann. In besonders vorteilhafter Weise ist die Busschnittstelle, d. h. der Signalausgang des Elektronikmoduls, als Flexray-, CAN-, LIN-, TTP- bzw. MOST-Bussystem ausgebildet, bei denen es sich um übliche Bussysteme im Fahrzeugbereich handelt. Diese Aufstellung ist jedoch rein beispielhaft und nicht abschließend, so dass auch andere Bussysteme denkbar sind.

In Weiterbildung der Erfindung ist das Gehäuse, in dem das Elektronikmodul angeordnet ist, zur Befestigung an einem Fahrwerksteil des Fahrzeuges ausgebildet. So kann beispielsweise das Gehäuse mit einer Schraube am Achsschenkel des Fahrwerkes angebracht werden, die z. B. auch der Befestigung eines Sensors (z. B. des Raddrehzahlsensors) dient. Damit ist es möglich, das Gehäuse an einem Fahrwerksteil zu befestigen, wobei die Befestigung entweder gleichzeitig mit der Befestigung eines Sensors oder unabhängig davon erfolgt.

In Weiterbildung der Erfindung ist zumindest einer der Sensoren in dem Gehäuse des Elektronikmoduls integriert. Dies hat den Vorteil, dass der Parameter des Fahrwerkes genau an der Stelle erfaßt werden kann, in dem das Elektronikmodul angeordnet ist. Weitere Vorteile liegen darin, dass der gegen äußere Umwelteinflüsse empfindliche Sensor innerhalb des Gehäuses des Elektronikmoduls angeordnet ist, so dass er dort vor diesen Umwelteinflüssen geschützt ist. Ebenso ist es von Vorteil, dass eine Zufuhrleitung zwischen dem Elektronikmodul und einem extern angeordneten Sensor entfallen kann, da der Sensor eben innerhalb des Elektronikmoduls integriert ist. So können beispielsweise der Sensor und die Signalverarbeitungsmittel auf einer Schaltungsplatine innerhalb des Elektronikmoduls angeordnet sein. Sind Sensor und Signalverarbeitungsmittel getrennt voneinander innerhalb des Elektronikmoduls angeordnet, ergeben sich in vorteilhafter Weise äußerst kurze Zuführleitungen, die unempfindlich gegen Störeinstrahlungen sind. Außerdem hat der zumindest eine in dem Elektronikmodul integrierte Sensor noch den Vorteil, dass diese gesamte Anordnung vor ihrer Montage im Fahrwerksbereich auf ihre Funktionstüchtigkeit geprüft werden kann.

In Weiterbildung der Erfindung ist an dem Elektronikmodul zumindest ein Aktuator anschließbar. Dieser zumindest eine Aktuator ist über Zuführleitungen mit dem Elektronikmodul verbunden oder je nach konstruktiver Ausgestaltung auch Bestandteil des Elektronikmoduls, d. h. in dem Gehäuse des Elektronikmoduls integriert. Damit ist es möglich, mit der erfindungsgemäßen Vorrichtung nicht nur Parameter im Fahrwerksbereich zu erfassen, sondern Bestandteile des Fahrwerksbereiches (wie z. B. Dämpfer oder Feder) zu beeinflussen (zu verstellen, insbesondere durch eine Steuerung oder Regelung mittels des zumindest einen Aktuators), um z. B. eine aktive Fahrwerksregelung oder Dämpfereinstellung zu ermöglichen. Ein besonderer Vorteil der erfindungsgemäßen Vorrichtung, wobei an dem Elektronikmodul Sensoren und Aktuatoren angeschlossen sind oder in dem Elektronikmodul integriert sind, ist darin zu sehen, dass sowohl die Erfassung der Parameter des Fahrwerkes als auch die Beeinflussung der Elemente des Fahrwerkes innerhalb des Elektronikmoduls erfolgen bzw. von diesem ausgehen kann. In einem denkbaren Fall ist somit die Signalausgabe von dem Elektronikmodul zu dem externen Steuergerät für diese Zwecke gar nicht erforderlich. Andererseits ist es denkbar, dass von dem externen Steuergerät bestimmte Regelgrößen an das Elektronikmodul gegeben werden, die dann bei der Parametererfassung bzw. bei der Ansteuerung der Aktuatoren berücksichtigt werden.

In Weiterbildung der Erfindung sind über den Signalausgang des Elektronikmoduls Signale bidirektional übertragbar. Dies hat zum einen den Vorteil, dass die Parameter, die im Fahrwerksbereich erfaßt und von den Sensoren in entsprechende Signale umgewandelt worden sind, zu dem externen Steuergerät übertragen werden können und gleichzeitig über ein und dieselbe Zufuhrleitung und die zugehörige Schnittstelle von dem Steuergerät bestimmte Vorgaben (wie insbesondere Regelgrößen) zu dem Elektronikmodul zurückübertragen werden können. In einer besonders vorteilhaften Ausgestaltung erfolgt sowohl die Signalübertragung als auch die Spannungsversorgung für das Elektronikmodul über den Signalausgang. Damit entfallen in besonders vorteilhafter Weise getrennte Leitungen für die Signalübertragung und die Spannungsversorgung, die über eine einzige Leitung erfolgen können. So kann beispielsweise die Spannungsversorgung eines Gleichspannung sein, wobei dem Gleichspannungssignal die zu übertragenden Signale sowohl von dem Elektronikmodul zu dem Steuergerät als auch umgekehrt aufmoduliert werden können.

Insgesamt bietet die erfindungsgemäße Vorrichtung den Vorteil, dass zum einen die Informationsauswertung der erfaßten Parameter direkt in der Vorrichtung (Sensorbox) erfolgen kann, wobei diese Informationsauswertung auch eine Plausibilitätsprüfung beinhalten kann. Das bedeutet, dass zum Beispiel die von den einzelnen Sensoren erfaßten Parameter in entsprechende Signale umgewandelt werden, wobei diese Signale innerhalb bestimmter Bereiche liegen müssen. Liegen die Signale nicht in dem vorgegebenen Bereich oder liegen z. B. aufgrund eines Kurzschlusses oder einer Unterbrechung überhaupt keine Signale vor, kann schon innerhalb des Elektronikmoduls aufgrund der Plausibilitätsprüfung ein Fehlerfall festgestellt werden, der bewertet wird. In Abhängigkeit dieser Bewertung kann z. B. entschieden werden, dass kein sicherheitskritischer Fehler vorliegt, der in dem Steuergerät eine Fehlermeldung von untergeordnetem Rang auslöst. Wird allerdings ein sicherheitskritischer Fehler (z. B. ein nicht ausreichender Luftdruck im Reifen) erfaßt, führt dies zu einer sicherheitsrelevanten Bewertung, die in dem Steuergerät eine sofortige Fehlermeldung und damit einen entsprechenden Hinweis an den Fahrer des Fahrzeuges gibt.

Weitere Ausgestaltungen der Erfindung sind in den Unteransprüchen angegeben und im folgenden anhand eines Ausführungsbeispieles in den Figuren erläutert und beschrieben.

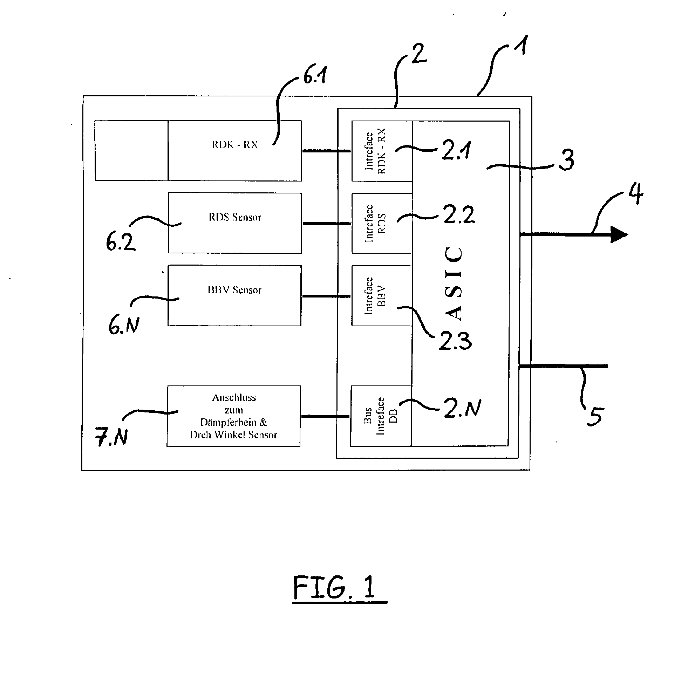

Das Ausführungsbeispiel gemäß Figur 1, auf das die Erfindung jedoch nicht beschränkt ist, zeigt eine Vorrichtung 1 zur Signalerfassung und Signalverarbeitung, die im Fahrwerksbereich eines Fahrwerkes angeordnet ist. Diese Vorrichtung 1 weist ein Elektronikmodul 2 auf, das in einem dichtend abschließenden und auch temperaturfesten Gehäuse im Fahrwerksbereich angeordnet ist. Eingangsseitig ist dieses Elektronikmodul 2 mit Signaleingängen 2.1 bis 2.N (N > 1) ausgestattet, wobei die an den einzelnen Signaleingängen hereinkommenden Signale Signalverarbeitungsmittel 3 zur Signalaufbereitung zugeführt werden. Diese Signalaufbereitungsmittel 3 sind vorzugsweise als ASIC (Application Specific Integrated Circuits) ausgebildet. Ein solcher ASIC-Baustein innerhalb des Elektronikmoduls 2 hat den Vorteil, dass er anwendungsspezifisch auf die Signalerfassung und auch die Signalverarbeitung bzw. -aufbereitung ausgebildet werden kann. Ausgangsseitig weist das Elektronikmodul 2 einen Signalausgang 4 auf, der in besonders vorteilhafter Weise als Busschnittstelle ausgebildet ist. Über diesen Signalausgang 4 können die erfaßten und aufbereiteten Signale drahtlos oder drahtgebunden an zumindest ein weiteres Steuergerät, das entfernt von der Vorrichtung 1 angeordnet ist, übertragen werden. Weiterhin weist die Vorrichtung 1 eine Spannungsversorgung 5 auf, die entweder in dem Gehäuse des Elektronikmoduls 2 integriert ist und/oder von außerhalb zuführbar ist. So ist es zum einen denkbar, dass das Elektronikmodul zwei bei entsprechend geringem Stromverbrauch eine eigene Spannungsversorgung (z. B. Batterie) aufweist, so dass eine externe Spannungsversorgung entbehrlich ist. Da aber mit steigender Anzahl von Sensoren und entsprechend aufwändiger Signalaufbereitung der Strombedarf des Elektronikmoduls 2 ansteigt, kann die Spannungsversorgung auch von außen erfolgen, wobei in besonders vorteilhafter Weise die Leitungen, die an dem Signalausgang 4 und an der Spannungsversorgung 5 angeschlossen werden, zu einer Leitung zusammengefaßt werden.

Entsprechend der Anzahl der Signaleingänge 2.1 bis 2.N weist die Vorrichtung 1 Sensoren 6.1 bis 6.N (N > 1) auf, bei denen es sich um solche Sensoren handelt, die Fahrwerksparameter des Fahrwerkes des Fahrzeuges erfassen. Hierbei handelt es sich insbesondere um Drehzahlsensoren für die Räder, Sensoren, die den Bremsbelagverschleiß erfassen, Sensoren für eine Reifendruckkontrolle, Sensoren für die Dämpferbein- bzw. federstellung, Drehwinkelsensoren und dergleichen. Diese Aufzählung ist beispielhaft und nicht zwangsweise abschließend. All diesen Sensoren ist gemeinsam, dass mit ihnen Fahrwerksparameter erfaßt werden, die für den Betrieb des Fahrzeuges oder sonstige Funktionen (z. B. Komfortfunktionen) ausgewertet werden müssen. Unter Betriebsfunktionen des Fahrzeuges sind beispielsweise Antiblockiersysteme, elektronische Stabilitätsprogramme und dergleichen zu nennen. Auch Dämpfungsregelungs- bzw. Federregelungs-Systeme sind darunter zu verstehen. Bei den Komfortfunktionen handelt es sich beispielsweise um Navigationsprogramme, die für ihre Funktion Informationen über zurückgelegte Wegstrecken, Lenkwinkelbewegungen und dergleichen erfordern. Neben den Betriebsfunktionen sind noch Sicherheitsfunktionen zu nennen, bei denen es sich beispielsweise um eine Kontrolle des Reifendruckes handelt, so dass der Reifendruck ständig von einem entsprechenden Sensor erfaßt und der erfaßte Reifendruck dem Elektronikmodul zugeführt wird, wobei z. B. nur dann ein Warnsignal nach einer Signalaufbereitung über den Signalausgang 4 an ein nachgeschaltetes Steuergerät abgegeben wird, wenn der Reifendruck einen vorgebbaren Sollbereich verläßt.

Die Sensoren 6.1 bis 6.N können einfach oder mehrfach vorhanden sein, so dass z. B. Drehzahlsensoren bei einem vierrädrigen Fahrzeug auch vierfach vorhanden sind. Bei mehrfachem Vorhandensein eines Sensors ist es denkbar, dass diese mehreren Sensoren gleichartig oder unterschiedlich voneinander aufgebaut sind. Ebenso ist je Radkasten des Fahrzeuges eine Vorrichtung 1 vorhanden, deren Elemente teilweise oder vollständig redundant ausgeführt sind.

Außerdem ist es möglich, an dem Elektronikmodul 2 nicht nur Sensoren, sondern auch Aktuatoren anzuschließen. Beispielhaft ist zumindest ein Aktuator 7.N (N > 1) gezeigt, der mit dem Elektronikmodul 2 verbunden ist.

Allgemein ist es auch denkbar, den Signaleingang 2.1 bis 2.N nicht als reinen Signaleingang auszubilden, sondern auch als Signalausgang (nämlich dann, wenn dort ein Aktuator angeschlossen ist) bzw. noch allgemeiner als Schnittstelle, über die die Signale, die von einem Sensor kommen bzw. die zu einem Aktuator gelangen sollen, bidirektional übertragen werden können.

Das Elektronikmodul 2 kann so aufgebaut sein, dass die Signalverarbeitungsmittel 3 z. B. getrennt von den Signaleingängen 2.1 bis 2.N auf einer Schaltungsplatine angeordnet sind. In besonders vorteilhafter Weise sind die Signaleingänge zumindest teilweise als Interface ausgebildet und in dem ASIC integriert. Alternativ oder ergänzend hierzu ist es möglich, dass zumindest einer der Signaleingänge ebenfalls, genauso wie der Signalausgang 4, als Busschnittstelle ausgebildet ist. Hierdurch wird es ermöglicht, dass ein Sensor, der seine erfaßten Signale ausgangsseitig ebenfalls über eine Busschnittstelle abgibt, an das Elektronikmodul 2 angeschlossen werden kann.

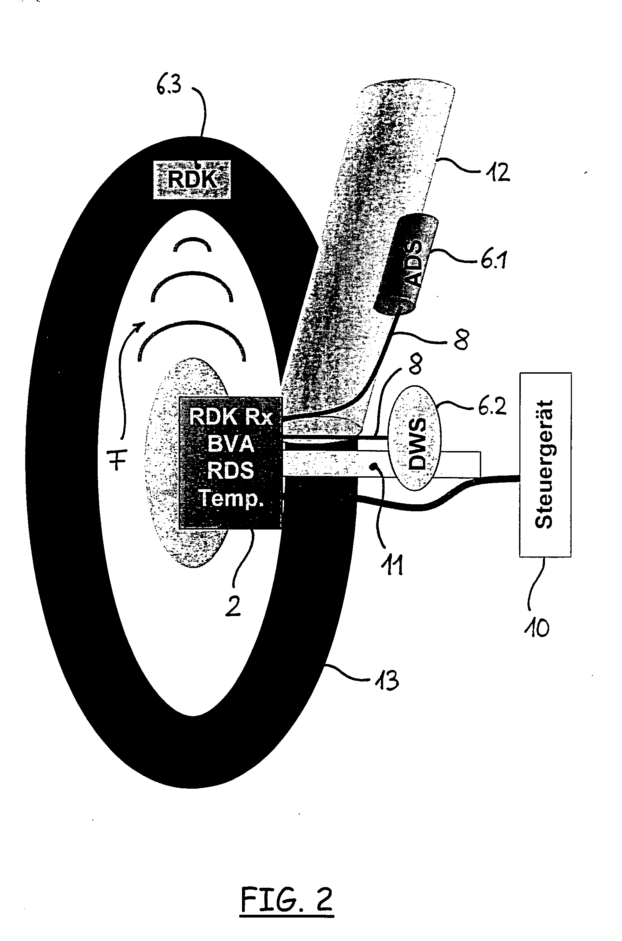

Figur 2 zeigt die Anordnung des erfindungsgemäßen Elektronikmoduls im Bereich des Fahrwerkes eines Fahrzeuges. Bezüglich der elektronischen Verschaltung sind an dem Elektronikmodul 2 gemäß Figur 2 wieder mehrere Sensoren angeschlossen, so beispielsweise der zumindest eine Aktuator 7.N (ADS = Adaptive Dämpfungssteuerung), der über eine Zufuhrleitung 8 mit dem Elektronikmodul 2 verbunden ist. Weiterhin ist der Sensor 6.2 (DWS = Drehwinkelsensor) über eine Zufuhrleitung 8 mit dem Elektronikmodul 2 verschaltet. Das bedeutet, dass die Parameter des Fahrwerkes von den entsprechenden Sensoren erfaßt und in Signale umgesetzt werden, die über Zufuhrleitungen 8 dem Elektronikmodul 2 zugeführt werden. Ausgangsseitig erfolgt die Signalabgabe (ggf. auch der Signalempfang) über eine Zufuhrleitung 9 zwischen dem Elektronikmodul 2 und einem externen Steuergerät 10. Das heißt, dass Signale unidirektional oder auch bidirektional zwischen dem Elektronikmodul 2 und dem Steuergerät 10 über die Zufuhrleitung 9 ausgetauscht werden können, wobei in besonders vorteilhafter Weise die Stromversorgung für das Elektronikmodul 2 ebenfalls über die Zufuhrleitung 9 erfolgt.

Weiterhin ist noch ein Sensor 6.3 (RDK = Reifendruckkontrolle) vorgesehen, der drahtlos über eine Funkstrecke F an dem Elektronikmodul 2 angeschlossen ist. Der Sensor 6.3 erfaßt den Reifendruck und sendet die entsprechenden Signale über die Funkstrecke F an einen entsprechenden Empfänger (RDK Rx) innerhalb des Elektronikmodules 2. Bei dem Ausführungsbeispiel gemäß Figur 2 sind nicht nur Sensoren extern an dem Elektronikmodul 2 angeschlossen, sondern auch in diesem Elektronikmodul 2 integriert. Hier sind beispielhaft zu nennen ein Sensor für die Erfassung eines Verschleisses von einem Bremsbelag (BVA = Bremsverschleißanzeige), ein Raddrehzahlsensor (=RDS) sowie ein Temperatursensor, der dazu dient, eine temperaturabhängige Kompensation der ermittelten Signale vorzunehmen, um Signalverfälschungen aufgrund stark schwankender Temperaturen, die insbesondere aufgrund von Bremsvorgängen innerhalb des Fahrwerkbereiches herrschen, vornehmen zu können. Die Integration eines solchen Temperatursensors innerhalb des Elektronikmodules 2 oder auch der Anschluß eines solchen Temperatursensors an dem Elektronikmodul 2 ist daher von besonderer Wichtigkeit, insbesondere auch im Zusammenhang mit der Plausibilitätsprüfung, so dass die ermittelten Signale auch temperaturabhängig bewertet werden können.

Zur Veranschaulichung der Anordnung des Elektronikmoduls 2 im Fahrwerksbereich sind noch eine Radachse 11, ein Feder-/Dämpferbein 12 sowie ein an der Radachse 11 angeordnetes Rad 13 dargestellt. Zur Vervollständigung sei noch erwähnt, dass ein Sensor (hier nicht dargestellt) die Stellung des Feder-/Dämpferbeines 12 erfaßt, der Sensor 6.2 die Stellung der Radachse 11 erfaßt sowie der Sensor 6.3 den Luftdruck in dem Rad 13 erfaßt. Die Stellung des Feder-/Dämpferbeines 12 wird durch den Aktuator 7.N eingestellt, wobei in besonders vorteilhafter Weise der Aktuator 7.N und der Sensor zur Stellungserfassung zusammengefaßt sind. Während in Figur 2 die externe und interne Anordnung von Sensoren in bzw. an dem Elektronikmodul 2 dargestellt ist, ist es auch möglich, dass an dem Elektronikmodul 2 zumindest ein Aktuator angeschlossen oder auch in diesem Elektronikmodul 2 integriert ist.

Insgesamt bietet die erfindungsgemäße Vorrichtung den Vorteil, dass nicht nur die Signalerfassung, sondern auch die Signalaufbereitung der im Fahrwerksbereich erfaßten Signale erfolgen kann, wodurch eine Signalaufbereitung in den nachgeschalteten Steuergeräten entfällt. So können die Datenströme bzw. Datenpakete (insbesondere Digitalsignale) am Signalausgang 4 so aufbereitet werden, dass sie ein standardisiertes Format (Protokoll) aufweisen, welches ohne Probleme über ein einziges, mehrere gleiche oder mehrere voneinander verschiedene Bussysteme zu den nachgeschalteten Steuergeräten übertragen werden können, wobei die nachgeschalteten Steuergeräte die Signalfolgen ohne weitere Signalaufbereitung oder -bearbeitung verarbeiten können.

In Bezug auf das Gehäuse, welches das Elektronikmodul schützend (insbesondere vor Wasser, Feuchtigkeit, chemischen Einwirkungen wie Streusalz, mechanische Einwirkungen wie Steinschlag sowie Temperatureinwirkungen) umgibt, sei noch erwähnt, dass es sich beispielsweise um ein separates Bauteil (insbesondere mehrteilig, zum Beispiel zwei Halbschalen aus stoß- und hitzebeständigen Kunststoff) handeln kann, in welches das Elektronikmodul eingesetzt wird und welches auch die Anschlüsse für die Sensoren, Aktuatoren, Signalaustausch und Stromversorgung aufnimmt.

Alternativ oder ergänzend dazu können auch das Elektronikmodul und seine beteiligten Elemente (so zum Beispiel eine Schaltungsplatine mit elektronischen Bauteilen und die zugehörigen Anschlüsse mit einem stoß- und hitzebeständigen Material, vor allem ein elektrisch nicht leitfähiger Kunststoff, umspritzt werden.

Das Gehäuse selber, egal wie es konstruktiv und fertigungstechnisch gestaltet ist, kann darüber hinaus Befestigungselemente (wie zum Beispiel Bohrungen, Laschen, Rastmittel und dergleichen) aufweisen, um es im Fahrwerksbereich befestigen zu können.

Bezugszeichenliste
- 1.: Vorrichtung zur Signal-Erfassung und -Verarbeitung
- 2.: Elektronikmodul
- 3.: Signalverarbeitungsmittel
- 4.: Signalausgang
- 5.: Spannungsversorgung
- 2.1: Signaleingang
- 2.2: Signaleingang
- 2.3: Signaleingang
- 2.N: Signaleingang
- 6.1: Sensor
- 6.2: Sensor
- 6.3: Sensor
- 6.N: Sensor
- 7.N: Aktuator
- 8.: Zufuhrleitungen
- 9.: Zufuhrleitungen
- 10.: Steuergerät
- 11.: Radachse
- 12.: Feder-/Dämpferbein
- 13.: Rad
- F: Funkstrecke

## Patentansprüche

1. Vorrichtung (1) zur Signalerfassung und Signalaufbereitung, wobei Sensoren (6.1 bis 6.N) zur Erfassung von Fahrwerksparametern eines Fahrzeuges im Fahrwerksbereich angeordnet sind und die erfaßten Parameter einem Elektronikmodul (2) zur Aufbereitung zugeführt werden, **dadurch gekennzeichnet, dass** das Elektronikmodul (2) entsprechend der Anzahl der Sensoren (6.1 bis 6.N) Signaleingänge (2.1 bis 2.N) aufweist sowie in einem dichtend abschließenden und temperaturfesten Gehäuse im Fahrwerksbereich angeordnet ist.

2. Vorrichtung (1) nach Anspruch 1, **dadurch gekennzeichnet, dass** das Elektronikmodul (2) einen Signalausgang (4) aufweist, der als Busschnittstelle ausgebildet ist, über die die erfaßten und aufbereiteten Signale an zumindest ein weiteres Steuergerät abgebbar sind.

3. Vorrichtung (1) nach Anspruch 1 oder 2, **dadurch gekennzeichnet, dass** das Elektronikmodul (2) eine Spannungsversorgung (5) aufweist, die in dem Gehäuse integriert ist und/oder von außerhalb zuführbar ist.

4. Vorrichtung (1) nach einem der Ansprüche 1 bis 3, **dadurch gekennzeichnet, dass** das Elektronikmodul (2) für die Signalaufbereitung als Signalverarbeitungsmittel (3) ein ASIC aufweist.

5. Vorrichtung (1) nach einem der vorhergehenden Ansprüche, **dadurch gekennzeichnet, dass** das Gehäuse zur Befestigung an einem Fahrwerksteil des Fahrzeuges ausgebildet ist.

6. Vorrichtung (1) nach einem der vorhergehenden Ansprüche, **dadurch gekennzeichnet, dass** die Sensoren (6.1 bis 6.N) über Zuführleitungen an das Elektronikmodul (2) angeschlossen werden, wobei am Ende der Zuführleitung eine Steckverbindung angeordnet ist, die mit einer Steckverbindung des zugehörigen Signaleinganges (2.1 bis 2.N) korrespondiert, wobei die Steckverbindung im zusammengesetzten Zustand abgedichtet ist.

7. Vorrichtung (1) nach einem der vorhergehenden Ansprüche, **dadurch gekennzeichnet, dass** zumindest einer der Sensoren (6.1 bis 6.N) in dem Gehäuse des Elektronikmoduls (2) integriert ist.

8. Vorrichtung (1) nach einem der vorhergehenden Ansprüche, **dadurch gekennzeichnet, dass** an dem Elektronikmodul (2) zumindest ein Aktuator (7.N) anschließbar ist.

9. Vorrichtung (1) nach einem der vorhergehenden Ansprüche, **dadurch gekennzeichnet, dass** über den Signalausgang (4) Signale bidirektional übertragbar sind.

10. Vorrichtung (1) nach einem der vorhergehenden Ansprüche, **dadurch gekennzeichnet, dass** über den Signalausgang (4) die Signalübertragung und die Spannungsversorgung erfolgt.
